# EUROPEAN PATENT SPECIFICATION

(11) **EP 1 325 893 B1**
(45) Date of publication and mention of the grant of the patent: **23.11.2016**
(21) Application number: 01967802.8
(22) Date of filing: 21.09.2001
(51) Int. Cl.: C03B 37/012, G02B 6/10, G02B 6/00

(54) **METHOD OF MANUFACTURING PHOTONIC CRYSTAL FIBER**
VERFAHREN ZUR HERSTELLUNG EINER FASER AUS PHOTONISCHEN KRISTALLEN
PROCEDE DE FABRICATION D'UNE FIBRE EN CRISTAL PHOTONIQUE

(30) Priority: 21.09.2000 JP 2000287528; 15.01.2001 JP 2001006394
(43) Date of publication of application: 09.07.2003
(73) Proprietor: Mitsubishi Cable Industries, Ltd., Amagasaki-shi Hyogo 660-0856 (JP); NIPPON TELEGRAPH AND TELEPHONE CORPORATION, Tokyo 100-8116 (JP)
(72) Inventor: TANAKA, Masatoshi, c/o MITSUBISHI CABLE INDUS. LTD, Itami-shi, Hyogo 664-0027 (JP); YAMAMOTO, Tetsuya, c/o MITSUBISHI CABLE INDUS. LTD, Itami-shi, Hyogo 664-0027 (JP); KOYANAGI, Shigeki, c/o MITSUBISHI CABLE INDUS. LTD, Itami-shi, Hyogo 664-0027 (JP); YOSHIDA, Minoru, c/o MITSUBISHI CABLE INDUS. LTD, Itami-shi, Hyogo 664-0027 (JP); FUJITA, Moriyuki, c/o MITSUBISHI CABLE INDUS. LTD, Itami-shi, Hyogo 664-0027 (JP); NAKAZAWA, Masataka, c/o NIPPON TELEG. & TELEPH. CO, Tokyo 100-8116 (JP); KUBOTA, Hirokazu, c/o NIPPON TELEG. & TELEPH. CO, Tokyo 100-8116 (JP); KAWANISHI, Satoki, c/o NIPPON TELEG. & TELEPH. CO, Tokyo 100-8116 (JP)
(74) Representative: Zinnecker, Armin
(86) International application number: PCT/JP2001/008269
(87) International publication number: WO 2002/024590

(56) References cited:
- EP-A- 0 905 834
- WO-A-00/37974
- WO-A-00/49436
- JP-A- 57 092 303
- JP-A- 57 208 512
- JP-A- 2000 035 521
- JP-A- 2001 220 164
- JP-A- 2001 220 165
- US-A- 5 802 236
- US-A- 6 097 870
- PATENT ABSTRACTS OF JAPAN vol. 0164, no. 19 (C-0981), 3 September 1992 (1992-09-03) & JP 4 144932 A (FUJIKURA LTD), 19 May 1992 (1992-05-19)
- T.A. BIRKS ET AL.: 'Endlessly single-mode photonic crystal fiber' OPTICS LETTERS vol. 22, no. 13, July 1997, pages 961 - 963, XP000658692
- R.F. CREGAN ET AL.: 'Single-mode photonic band gap guidance of light in air' SCIENCE vol. 283, September 1999, pages 1537 - 1539, XP000914812

## Description

### TECHNICAL FIELD

The present invention relates to a method for manufacturing a photonic crystal fiber (hereinafter referred to as "PC fiber") having a core portion, provided with a fiber core extending in the lengthwise direction and formed as a solid or a void, and a porous clad portion having numerous pores extending along the core portion and provided around the core portion.

### BACKGROUND ART

Optical fibers made of a core portion and a clad portion are very well known as media for propagating light. Moreover, PC fibers have attracted much attention in recent years because they can achieve a large wavelength dispersion, which was not possible with optical fibers having this configuration. PC fibers include a core portion provided with a fiber core extending in the lengthwise direction and formed as a solid or a void, and a porous clad portion provided enclosing the core portion and having numerous pores extending along the core portion.
One method for manufacturing these PC fibers is preparing a cylindrical body made primarily of SiO₂, fabricating a preform by providing numerous pores peripheral to the central axis portion of the cylindrical body and passing therethrough in the direction of the central axis, and then drawing the preform.

Another such method is bundling multiple capillaries made of SiO₂ into a densely packed state, fabricating a preform by fusing together the outer surfaces of adjacent capillaries, and then drawing the preform.

The former manufacturing method, however, provides multiple pores close to one another in the cylindrical body, and thus the portions separating adjacent pores from one another are extremely thin and may break during processing, which makes fabrication of the preform very difficult.

In the case of the latter manufacturing method, it is very difficult to fuse the capillaries together while maintaining the configuration of multiple capillaries bound in a densely packed state.

A method for manufacturing a photonic crystasl fiber according to the features of the preamble part of claim 1 is known from US-A-5 802 236. WO-A-0049436 discloses a similar method for manufacturing an optical fiber.

### DISCLOSURE OF THE INVENTION

It is an object of the present invention to provide a method for manufacturing a PC fiber without the accompanied difficulties explained above.

According to the invention, this object is achieved by a method for manufacturing a photonic crystal fiber having the features of claim 1.

To achieve this object, in the present invention, a preform is fabricated by packing capillaries into a support pipe, and the preform is drawn.

More specifically, the present invention provides a method for manufacturing a PC fiber that includes a core portion with a fiber core provided extending in a lengthwise direction and formed as a solid or a void, and a porous clad portion provided around the core portion and having numerous pores extending along the core portion. Furthermore, it is characterized in that it includes a step of fabricating a preform by packing numerous capillaries into a cylindrical support pipe such that they are parallel to the central axis of the support pipe and positioning a core rod (core material) to serve as the solid core portion in the central axis portion of the support pipe, or forming a space to serve as the void core portion in the central axis portion of the support pipe, and a step of drawing the preform to make it small in diameter.

With this configuration, the preform is fabricated in a state in which the numerous capillaries are bound by the support pipe and the preform is drawn, making it smaller in diameter (make it into fiber). Thus, the problem of portions separating adjacent pores breaking during processing, which is the case if the preform is fabricated by boring pores into a cylindrical body, does not occur. Moreover, the capillaries are held by the support pipe, so that there are none of the problems associated with fabricating a preform by fusing capillaries with one another into a single piece, and the PC fiber can be easily manufactured.

Here, if in a horizontal cross section the border of the inner wall of the support pipe is circular, then when the capillaries are disposed such that portions related to the propagation of light peripheral to the core rod or space serving as the core portion are densely packed, the capillaries at the portions far from the core portion (in particular, near the inner wall of the support pipe) are assembled with a low packing ratio in order to fill gaps in the support pipe. Consequently, of the packed capillaries, not more than 70% function as photonic crystals once they have been densely packed and drawn. For example, if 100 capillaries are packed, about 70 of those can be used effectively. Moreover, because the packing ratio of the capillaries drops near the inner wall of the support pipe, there is greater shrinkage here than around the core portion during drawing, and gaps (grating defects) are formed within the capillary bundle as a result. These gaps cause dislocations (phase transitions) in the positioning of the packed capillaries.

According to the invention the border of the inner wall in a horizontal cross section of the support pipe is formed in a substantially regular hexagonal shape. Such a structure allows almost all capillaries to be packed into the support pipe in a densely packed state, and substantially 100% of the packed capillaries function as photonic crystals after drawing. Additionally, because there is no difference in the capillary packing ratio near the inner wall of the support pipe and around the core portion, the capillary bundle is shrunk uniformly during the drawing process and gaps (grating defects) formed within the capillary bundle can be suppressed to a minimum. Moreover, because the capillary bundle is shrunk uniformly, it is difficult for displacement (phase transition) in the arrangement of the capillaries to occur. Also, it is necessary only that the capillaries are densely packed in order from near the inner wall of the support pipe, so that there is almost no need to give consideration to keeping the arrangement of the capillaries around the core portion from being disrupted during the task of packing the capillaries into the support pipe, and work efficiency is improved.

According to the invention the substantially regular hexagonal inner wall border of the support pipe has been dimensioned such that all capillaries next to an inner wall of the support pipe come into contact with that inner wall when the preform is fabricated by densely packing capillaries into the support pipe and drawn to make its diameter small. With this configuration, there is an extremely low degree of freedom for the capillaries during drawing, and displacement (phase transition) in the arrangement of the capillaries can be more effectively prevented. When fabricating the preform, gaps formed between the inner walls of the support pipe and the capillaries become extremely small and a densely packed state can be achieved simply by packing the capillaries in order from near the inner walls of the support pipe, so that almost no consideration needs to be given to keeping the arrangement of the capillaries from being disrupted, and the task of packing the capillaries into the support pipe becomes more efficient.

In the above, the shape of the substantially regular hexagonal border of the inner wall of the support pipe includes not only a so-called regular hexagon but also, for example, one in which the corner portions have been rounded, such as if the adjacent edges were joined by an arc. Here, it is preferable that the radius of the arc is not more than half the maximum diameter of the capillaries if a substantially regular hexagon is formed by joining the adjacent edges in an arc. This is because if it is larger than half the maximum diameter of the capillaries, then the capillaries positioned at the corner portions do not sit well and the dense packing of the capillaries is lost from that portion.

It is also preferable that the process for fabricating the preform includes packing a filler such as thin diameter quartz rods or quartz powder into gaps formed between the inner wall of the support pipe and the capillaries next to the inner wall. This configuration inhibits deformation in the outer circumference portion of the capillary bundle during drawing.

Incidentally, heat during the drawing process in methods for manufacturing a PC fiber using capillaries may cause the capillary pores to shrink or collapse, which makes it difficult to form a stable photonic crystal structure.

Accordingly, JP H10-95628A discloses a method for manufacturing a PC fiber in which a preform is formed by a pipe bundle, in which one end of the silica capillary pipes (capillaries) is sealed and numerous capillaries are bundled in a closely packed arrangement with the sealed ends and the open ends on the same respective side, the silica capillary pipe (capillary) in the center is replaced by a silica pipe or a silica rod, and the preform is drawn from the open end side of the silica capillary pipes (capillaries). Furthermore, it discusses how with this configuration, the internal pressure that is obtained in the voids (capillary pores) of the silica capillary pipes (capillaries) holds the voids (capillary pores) open, which means that the voids (capillary pores) are kept from shrinking and collapsing.

However, even with the method disclosed in JP H10-95628A there are hydroxyl groups (OH groups) formed on the inner surface of the capillaries due to reactions with moisture in the air during drawing, because at least one end of the capillaries is open and thus new air can infiltrate the capillaries at any time. When many hydroxyl groups are formed in the PC fiber, they absorb signal light of a specific wavelength (1.38 µm) and cause transmission loss.

According to the invention both ends of each of the numerous capillaries are sealed. This will stop new air from infiltrating the capillaries because both ends of the capillaries have been sealed, so that hydroxyl groups are prevented from forming on the inner wall of the capillaries due to reactions with moisture in the air during drawing, and the PC fiber that is obtained will have less transmission loss than conventionally. Here, the capillaries can be sealed before or after the preform is fabricated.

It is also preferable that both ends of the capillaries are sealed after the pressure inside the capillaries has been set such that the capillaries maintain a similar shape while their diameter is reduced during drawing. Using capillaries with both ends sealed causes a difference in pressure inside and outside the capillaries during drawing, and the capillaries have the characteristic of expanding or shrinking due to unevenness in their wall thickness. However, as explained above, the pressure inside the capillaries has been suitably set such that the capillaries maintain a similar shape as their diameter is made smaller during drawing, and thus PC fibers of a desired structure are stably manufactured. Here, the pressure inside the capillaries is determined, for example, by the thickness of the capillary wall, the drawing temperature, and the pressure outside of the capillaries during drawing.

Moreover, it is preferable that the both ends of the capillaries are sealed after a gas inert in the formation of hydroxyl groups has been filled into the capillaries. Although small, there is the risk that, due to moisture in the air, hydroxyl groups are formed on the inner surface of capillaries whose both ends have been sealed with air trapped inside. Performing the above, however, eliminates contact between the moisture and the inner surface of the capillaries, so that the formation of hydroxyl groups at the capillary inner surface is almost entirely eliminated. Here, the gas inert in the formation of hydroxyl groups is a gas that does not form hydroxyl groups on the inner surface of the capillaries, and for example may be a rare gas such as argon (Ar), or chlorine (Cl₂) gas or nitrogen (N₂) gas.

It is furthermoe preferable that the inner and/or outer surface of the capillaries is etched by hydrofluoric acid or the like. Hydroxyl groups may form on the inner and/or outer surface of capillaries during the manufacturing stage. However, if the above is performed, the surface layer of the inner and/or outer surface of the capillaries is etched by hydrofluoric acid or the like, and thus hydroxyl groups are removed and the PC fiber that is obtained has few hydroxyl groups. Here, it is preferable that if a core rod is used, its outer surface is also etched by the hydrofluoric acid or the like.

It is also preferable that the inner and/or outer surface of the capillaries is dehydrated by chlorine gas or the like. This dehydrates the inner and/or outer surface of the capillaries by chlorine gas or the like, removing hydroxyl groups and moisture, and thus the obtained PC fiber has few hydroxyl groups. It is preferable that if a core rod is used, its outer surface is also dehydrated by the chlorine gas or the like.

It is furthermore also preferable that the drawing process is performed with the voids formed inside the preform in a state of reduced pressure. Both ends of the preform can be completely sealed and then drawn to stop the formation of hydroxyl groups on the outer surface of the capillaries and the outer surface of the core rod, however, this increases the pressure in the voids formed between the capillaries and results in these voids (interstitial sites) remaining in the obtained PC fiber without being eliminated. However, if drawing is performed with the voids formed between the capillaries inside the preform in a state of reduced pressure, as explained above, then moisture can be kept from coming into contact with the outer surface of the capillaries and the outer surface of the core rod, and the pressure-reduced voids are smoothly collapsed due to the heightened pressure inside the capillaries caused by heating, and thus the structural stability of the photonic crystal is increased and a PC fiber with very low background transmission loss can be obtained. Here, reducing the pressure in the voids formed between the capillaries in the preform can be done by sealing both ends of the preform to put the voids into a state of reduced pressure, or discharging gas from the voids while drawing to put the voids into a state of reduced pressure.

### BRIEF DESCRIPTION OF THE DRAWINGS

Fig. 1 is a cross-sectional diagram of the preform according to the first embodiment.
Fig. 2 is a perspective view of the PC fiber according to the first embodiment.
Fig. 3 is a cross-sectional diagram of the preform according to the second embodiment.
Fig. 4 is a diagram showing the process for fabricating capillaries according to the third embodiment.
Fig. 5 is a cross-sectional diagram of the preform according to the third embodiment.
Fig. 6 is a diagram showing the process for dehydration by chlorine gas according to the third embodiment.
Fig. 7 is a diagram of the drawing process according to the third embodiment.
Fig. 8 is a perspective view of the PC fiber according to the third embodiment.
Figs. 9A to 9D are diagrams of the drawing processes of Examples 1, 2, 5, and 6, respectively, of the experimental examples of the third embodiment.
Fig. 10 is a diagram showing the process for fabricating capillaries according to another embodiment.
Fig. 11 is a diagram of a drawing process according to another embodiment.

### BEST MODE FOR CARRYING OUT THE INVENTION

### First Embodiment

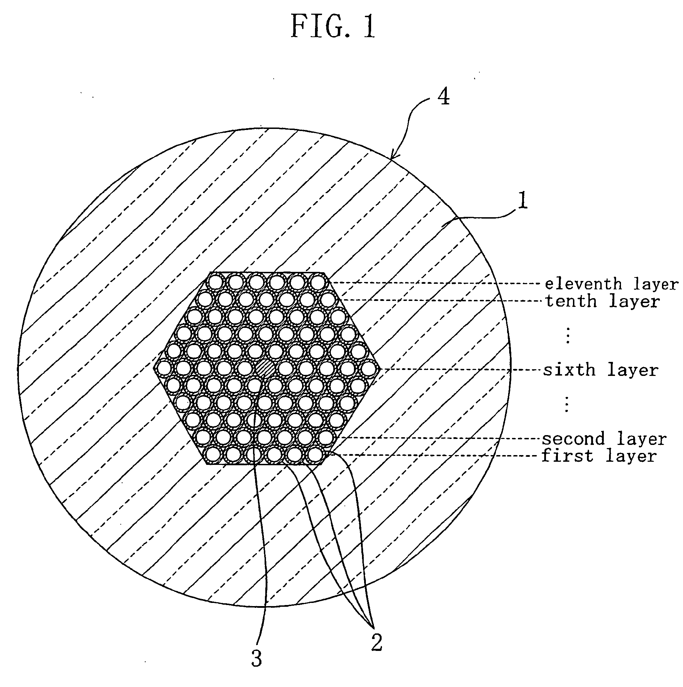

The process steps in the method for manufacturing a PC fiber according to a first embodiment of the present invention will be described with reference to Fig. **1****.**

### Preparatory Process

A support pipe **1,** in which a hole of regular hexagonal cross section is provided in a cylindrical body made of SiO₂ along its central axis, 90 cylindrical capillaries **2,2, ...** made of SiO₂, and a cylindrical core rod **3** made of SiO₂ and of the same thickness as the capillaries **2** are prepared. Here, the hole of regular hexagonal cross section provided in the support pipe **1** has been dimensioned so that all capillaries **2, 2,** ... next to an inner wall of the support pipe **1** are brought into contact with that inner wall when a preform **4** fabricated by densely packing the 90 capillaries **2, 2, ...** (and the core rod 3) into the support pipe **1** is drawn to make its diameter small. This means that its dimensional settings are such that when the capillaries **2** of the eleventh layer, explained below, are packed when the capillaries **2, 2, ...** (and the core rod **3)** are densely packed into the support pipe **1,** voids are formed to an extent that the capillaries **2** are not left unpacked due to friction with the capillaries **2, 2** of the tenth layer, ... and the inner wall of the support pipe **1,** and once the eleventh layer has been packed, extremely small gaps are formed between the eleventh layer capillaries **2, 2, ...** and the inner walls of the support pipe **1.**

### Capillary and Core Rod Packing Process (Preform Fabrication Process)

The capillaries **2, 2**, ... are packed into the support pipe **1.** Six capillaries **2, 2,** ... are lined up side by side at this time so as to cover the surface of one inner wall of the support pipe **1** and form a first layer, and capillaries **2** are then disposed such that they are arranged between pairs of capillaries **2, 2** in the formed first layer to form a second layer (the second layer is made up of seven capillaries **2).** The capillaries **2** are packed up to a fifth layer in this manner. Then, the capillaries **2** for the sixth layer are packed in the same manner as up to the fifth layer, except that only the sixth capillary, which is positioned in the center, is not a capillary **2** but instead the core rod **3.** The capillaries 2 are then packed up to the eleventh layer.

Next, filler (not shown) such as narrow diameter quartz rods or quartz powder is packed into the gaps formed between the inner walls of the support pipe **1** and the capillaries **2, 2,** ... next to these walls.

Thus, as explained above, the preform **4** for a PC fiber, in which 90 capillaries **2, 2,** ... are packed into the support pipe **1** and the core rod **3** has been disposed at the central axis position, is fabricated as shown in Fig. **1****.**

### Drawing Process

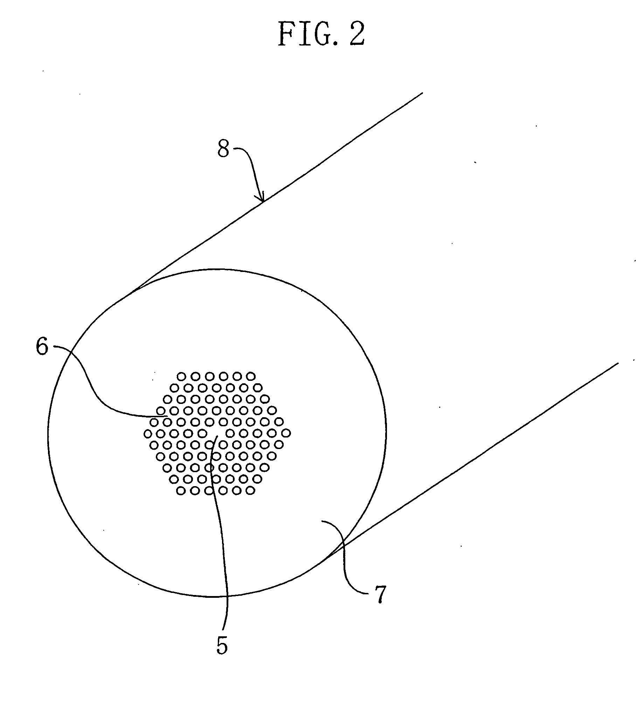

The preform **4,** which has been fabricated by packing the capillaries **2, 2,** ... and the core rod **3** into the support pipe **1,** is heated and stretched in a drawing process to make its diameter small (make it into fiber). At this point, the capillaries **2** are fused into a single unit by fusing the capillaries **2** with adjacent capillaries **2,** fusing the capillaries **2** with the support pipe **1,** and fusing the capillaries **2** with the core rod **3.** Then, as shown in Fig. **2****,** a PC fiber **8** provided with a core portion **5** formed as a solid and provided with a fiber core extending in the lengthwise direction, a porous clad portion **6** provided around the core portion **5** and having numerous pores extending along the core portion **5,** and a jacket portion 7 provided such that it covers these, is manufactured.

With this method for manufacturing the PC fiber **8,** the preform **4** is fabricated with the numerous capillaries **2, 2, ...** in a state bound by the support pipe 1 and this preform **4** is drawn to make its diameter smaller (make it into fiber), so that the problem of the portions that separate adjacent pores being broken during processing, as is the case when fabricating the preform by boring holes into a cylindrical body, does not occur, and the capillaries **2, 2,** ... are held by the support pipe **1** so that there are none of the difficulties such as when the preform is fabricated by fusing the capillaries with one another into a single unit, and the PC fiber **8** can be easily manufactured.

Furthermore, the border of the inner wall in a horizontal cross section of the support pipe **1** is formed in the shape of a regular hexagon, so that all capillaries **2, 2,** ... can be packed into the support pipe **1** in a densely packed state, and once 100% of the packed capillaries **2, 2,** ... have been drawn, they function as photonic crystals. Since the capillary packing ratio near the inner walls of the support pipe **1** is not different from that at the periphery of the core portion, the capillary bundle is shrunk uniformly during drawing and gaps (grating defects) formed within the capillary bundle can be suppressed to a minimum.

Furthermore, the regular hexagon inner wall border of the support pipe 1 has been dimensioned so that all capillaries **2, 2, ...** next to an inner wall of the support pipe 1 come into contact with that inner wall when the preform **4** fabricated by densely packing the capillaries **2, 2,** ... into the support pipe **1** is drawn to make its diameter smaller, and thus there is an extremely low degree of freedom for the capillaries **2, 2, ...** during drawing, and displacement (phase transition) in the arrangement of the capillaries **2, 2,** ... can be more effectively prevented. When fabricating the preform **4,** the gaps formed between the inner walls of the support pipe **1** and the capillaries **2, 2,** ... become very small and a closely packed state can be achieved simply by packing the capillaries **2, 2,** ... in order from near the inner walls of the support pipe **1,** and therefore consideration for keeping the arrangement of the capillaries **2, 2,** ... from being disrupted is almost entirely unnecessary and the task of packing the capillaries **2, 2, ...** into the support pipe **1** is made more efficient.

Furthermore, filler is packed between the inner walls of the support pipe and the capillaries next to the inner walls, and thus the outer periphery of the capillary bundle can be kept from deforming during the drawing process.

### Second Embodiment

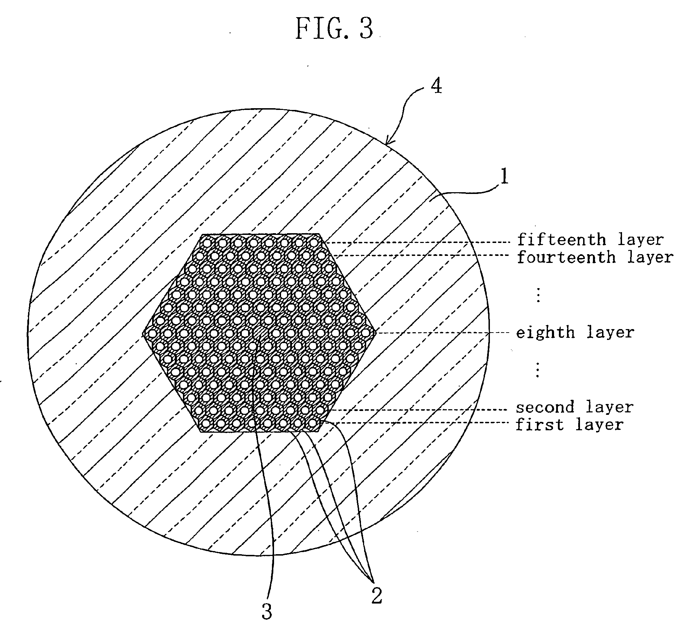

The process steps in the method for manufacturing a PC fiber according to a second embodiment of the present invention will be described with reference to Fig. **3****.** Portions identical to those of the first embodiment are shown in the drawing by identical numerals.

### Preparation Process

A support pipe **1** in which a hole of regular hexagonal cross section is provided in a cylindrical body made of SiO₂ along its central axis, 168 capillaries **2,2,** ... made of SiO₂ and with an outer border of a regular hexagonal cross section and a pore of a circular cross section provided in its center, and a core rod **3** made of SiO₂ and of the same hexagonal rod shape as the capillaries **2,** are prepared. Here, the hole of regular hexagonal cross section provided in the support pipe **1** has been dimensioned such that all capillaries **2, 2,** ... next to an inner wall in the support pipe **1** are brought into contact with that inner wall when the preform **4** fabricated by densely packing the 168 capillaries **2, 2, ...** (and the core rod **3)** into the support pipe **1** is drawn to reduce its diameter. The dimensional settings are the same as those of the first embodiment.

### Capillary and Core Rod Packing Process (Preform Fabrication Process)

Eight capillaries **2, 2, ...** are lined up side by side so as to completely cover the surface of one inner wall of the support pipe **1** to form a first layer, and then capillaries **2** are set such that they are arranged between pairs of capillaries **2, 2** in the formed first layer to form a second layer (the second layer is made up of nine capillaries **2).** The capillaries **2** are packed up to a seventh layer in this manner. Then, the capillaries **2** for the eighth layer are packed in the same way as up to the seventh layer, except that only the eighth capillary, which is positioned in the center, is not a capillary **2** but instead the core rod **3.** The capillaries **2** are then packed up to a fifteenth layer.

Next, filler (not shown) such as narrow diameter quartz rods or quartz powder is packed into the space formed between the inner walls of the support pipe **1** and the capillaries **2, 2**, ... next to these walls.

Thus, as explained above, the preform **4** for a PC fiber, in which 168 capillaries **2, 2, ...** have been packed into the support pipe **1** and the core rod **3** has been disposed at the central axis position, is fabricated, as shown in Fig. **3****.**

The constitution, the operation, and the effect of the drawing process are identical to those of the first embodiment.

### Third Embodiment

The process steps in the method for manufacturing a PC fiber according to a third embodiment of the present invention will be described with reference to the drawings. Portions identical to those of the first embodiment are shown in the drawing by identical numerals.

### Capillary Fabrication Process

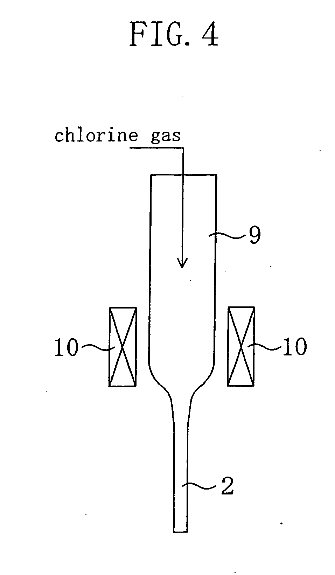

As shown in Fig. **4****,** a cylindrical quartz (SiO₂) pipe 9 is heated and stretched by an electric furnace **10** to produce a long capillary **2.** Chlorine gas is circulated inside the quartz pipe **9** and the capillary **2** at this point to remove hydroxyl groups and moisture on the inner surface of the capillary **2** and to expel air and thus prevent moisture from adhering to the inner surface of the capillary **2.** Also, both ends of the long capillary **2** that has been obtained are sealed to create a condition in which the inside of the capillary **2** is filled with chlorine gas. The pressure of the chlorine gas in the capillary **2** at this time is set to a predetermined value such that the capillary **2** maintains a similar shape as it is drawn to give it a smaller diameter. Then, the long capillary **2** is cut into predetermined lengths using a micro burner, for example, to produce capillaries **2, 2,** ... with capillary sealing portions **2a, 2a** formed at both ends and chlorine gas filled in its interior. Because chlorine gas is filled in the capillaries **2,** moisture no longer comes into contact with the inner surface of the capillaries **2.**

### Preparation Process

Numerous capillaries **2, 2, ...** fabricated in the capillary fabrication process, a single core rod **3** made of quartz and of the same outer diameter and length as the capillaries **2,** and one cylindrical support pipe **1** made of quartz and which is shorter than the capillaries **2** and the core rod **3** are prepared.

### Capillary and Core Rod Packing Process (Preform Fabrication Process)

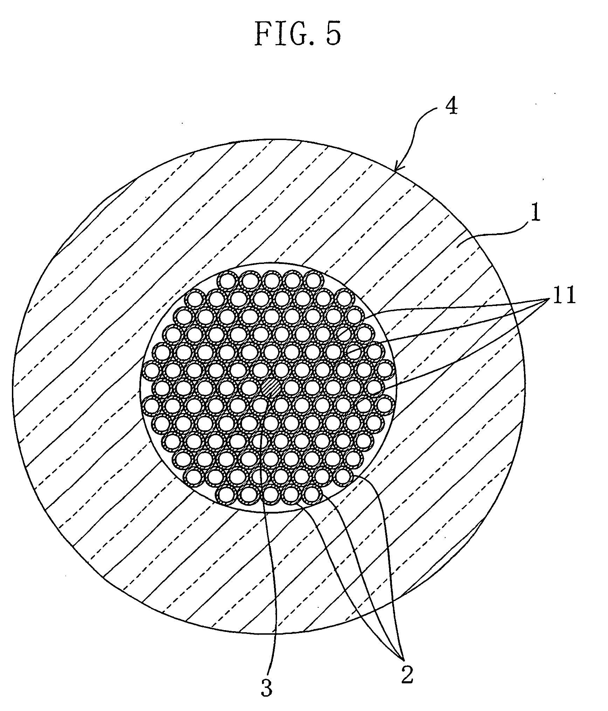

The capillaries **2, 2, ...** and the core rod **3** are packed into and pass through the support pipe **1.** In a horizontal cross section of the support pipe **1,** the capillaries **2, 2,** ... are at this point densely packed such that the capillary pores form a triangular grating and the core rod **3** is positioned at the central axis location. Accordingly, movement of the capillaries **2** and the core rod **3** is restricted by the support pipe **1.** Additionally, the capillaries **2, 2,** ... and the core rod **3** have a circular cross section, so that voids **11, 11,** ... substantially triangular in shape in a cross section thereof are formed for example between the capillaries **2** in the support pipe **1.** Then, filler such as quartz powder is filled in the gaps created between the outermost layer of the capillary bundle and the inner walls of the support pipe **1** to prevent dislocation of the capillaries **2** Thus, as explained above, the preform **4,** which is made of numerous capillaries **2, 2,** ... disposed in a densely packed state forming a capillary bundle, the core rod **3** arranged at the central axis position thereof, and the support pipe **1** for holding the capillary bundle made of the capillaries **2, 2**, ... and the core rod **3,** as shown in Fig. **5****,** is fabricated.

### Dehydration Treatment by Chlorine Gas

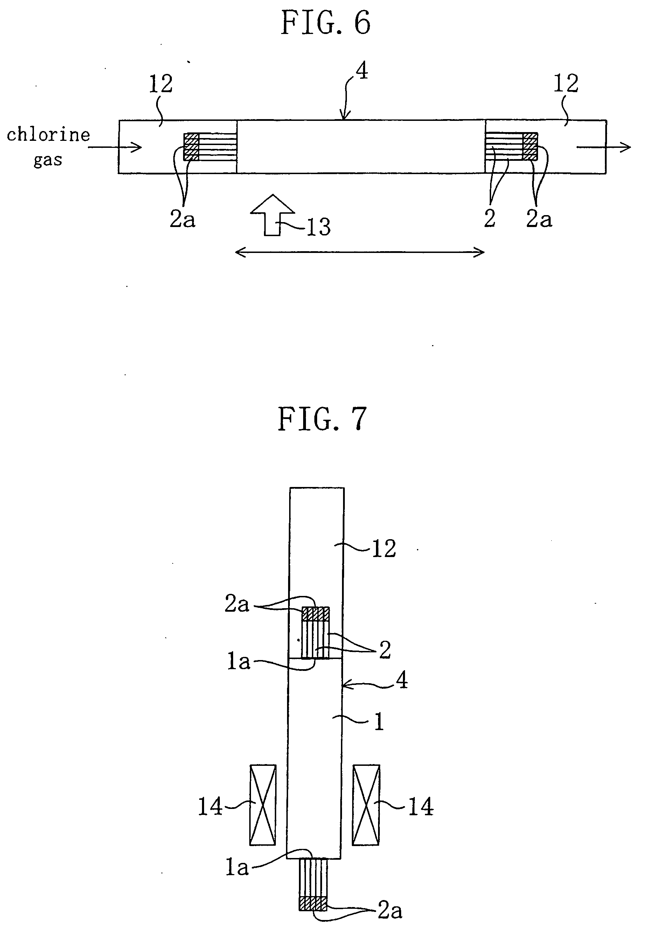

As shown in Fig. **6****,** auxiliary pipes **12, 12** made of quartz of an outer diameter that is substantially the same as that of the support pipe **1** are each welded to an end of the preform **4.** Then, chlorine gas is introduced into the open portion of one of the auxiliary pipes **12** and circulated through the voids **11, 11, ...** formed in the support pipe **1,** and ultimately discharged from the open portion of the other auxiliary pipe **12.** A flame **13** is concurrently moved back and forth in the lengthwise direction of the preform **4** to heat the outside thereof. The chlorine gas removes the hydroxyl groups and moisture on the outer surface of the capillaries **2, 2,** ... and the outer surface of the core rod **3.** Then, the inside of the support pipe **1 is** reduced in pressure by a vacuum pump to put the voids **11, 11, ...** between the capillaries **2** into a state of reduced pressure, while both ends of the support pipe **1** are heated to form support pipe sealing portions **1a, 1a.** At this point, air is kept from infiltrating the voids **11, 11,** ...and the voids **11, 11,** ... are in a state filled with chlorine gas.

### Drawing Process

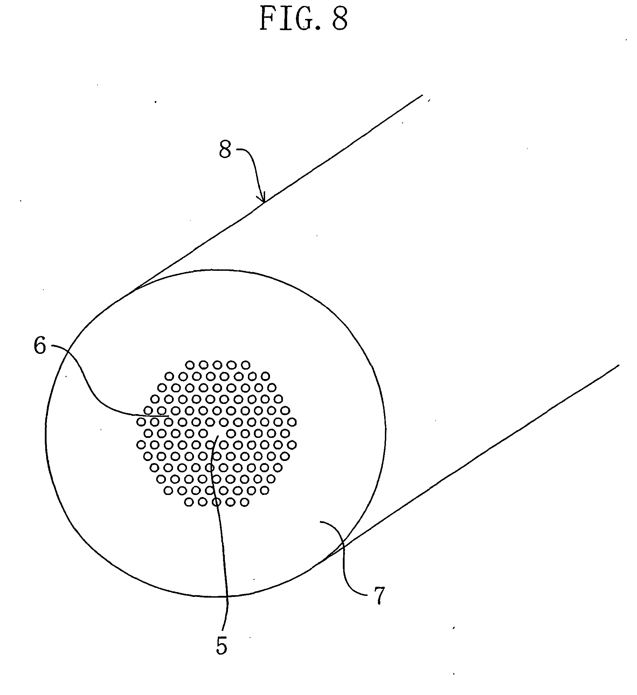

One of the auxiliary pipes **12** is removed from the preform **4,** and as shown in Fig. **7****,** the preform **4** is set into a drawing machine such that the remaining auxiliary pipe **12** is on top. Then, the preform **4** is subjected to a drawing process in which it is heated and stretched by a drawing furnace **14** to give it a smaller diameter (make it into fiber). At this time the capillaries **2, 2,** ...have a predetermined internal pressure and are drawn in a sealed state so that the capillaries **2, 2,** ...maintain a similar shape while they are reduced in diameter. Also, the voids **11, 11, ...** formed in the support pipe 1 are sealed in a state of reduced pressure and are filled with chlorine gas, and thus moisture is prevented from coming into contact with the outer surface of the capillaries **2** and the outer surface of the core rod **3.** At the same time, the pressure-reduced voids **11, 11,** ...collapse smoothly because of the heightened internal pressure of the capillaries **2, 2, ...** due to heating. This fuses the capillaries **2** into a single unit by fusing the capillaries **2** with adjacent capillaries **2,** fusing the capillaries **2** with the core rod **3,** and fusing the capillaries **2** with the support pipe **1.** Thus, as shown in Fig. **8****, a** PC fiber **8** made of a solid core portion **5** in which the fiber core extends in the lengthwise direction, a porous cladding portion **6** provided around the core portion **5** and having numerous pores extending along the core portion **5,** and a jacket portion **7** provided so as to coat these portions, is manufactured.

According to this method for manufacturing a PC fiber **8,** both ends of the capillaries **2** are sealed by capillary sealing portions **2a, 2a,** thereby stopping air from infiltrating the capillaries **2,** and chlorine gas inert in the formation of hydroxyl groups is filled into the capillaries **2,** thereby preventing moisture from coming into contact with the inner surface of the capillaries **2.** Moreover, the outer surface of the capillaries **2** and the outer surface of the core rod **3** are dehydrated by the chlorine gas, removing hydroxyl groups and moisture therefrom, so that the PC fiber **8** that is obtained has few hydroxyl groups and there is very low transmission loss of 1.38 *µ*m wavelength light, which is absorbed by hydroxyl groups.

Moreover, the pressure inside the capillaries **2** is appropriately set in advance so that the capillaries **2** retain a similar shape as they are reduced in diameter during the drawing process, and by executing the drawing process with the voids **11** formed in the support pipe **1** in a state of reduced pressure, the pressure-reduced voids **11** are collapsed smoothly because of the heightened pressure inside the capillaries **2** due to heating. Thus, the structural stability in the photonic crystal structure is increased and the PC fiber **8** that is obtained has very low background transmission loss.

Also, because the preform **4** is fabricated with the capillaries **2** and the core rod **3** bound by the support pipe **1,** shifting of the capillaries **2** and the core rod **3** is restricted by the support pipe **1,** workability in the drawing process is good, and the PC fiber **8** that is obtained is homogenous in the lengthwise direction.

Experimental examples in which actual PC fibers are tested and evaluated will be described next.

### Tested and Evaluated Samples

The following PC fiber sample examples were fabricated.

### Example 1

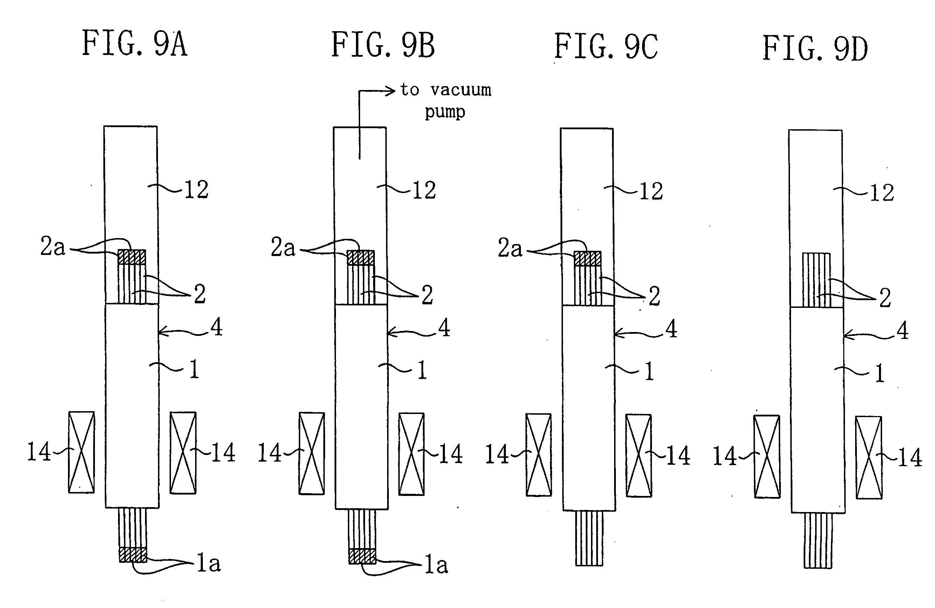

A quartz pipe was heated and stretched under atmospheric pressure to produce numerous capillaries of 500 *µ*m outer diameter and 300 mm length. Then, these capillaries and a core rod of 500 *µ*m outer diameter and 300 mm length were densely packed into a support pipe with a 26 mm outer diameter and a 10 mm inner diameter. At this point, the capillary pores formed a triangular grating in an end face, and the core rod was disposed at the central axis position. Next, both ends of each of the capillaries were heated and sealed, fabricating a preform. Then, as shown in Fig. **9A****,** an auxiliary pipe **12** was welded to one end of the support pipe **1,** and the preform **4** was set in the drawing machine such that the auxiliary pipe **12** was on top. The preform **4** was then heated and stretched by the drawing furnace **14** in a drawing process to produce a PC fiber having a 100 *µ*m outer diameter, which was taken as Example **1.**

### Example 2

The same preform as that of Example **1** was fabricated, auxiliary pipes were welded to both ends of the support pipe **1,** and as in the above embodiment, dehydration by chlorine gas was performed. Next, one of the auxiliary pipes was removed, and as shown in Fig. **9B****,** the preform **4** was set in the drawing machine such that the remaining auxiliary pipe **12** was on top. A vacuum pump was then connected to the auxiliary pipe **12** and air was discharged from the voids formed in the support pipe **1,** thus holding the voids in a state of reduced pressure at 4.80 × 10⁴Pa, and the preform **4** was heated and stretched by the drawing furnace **14** in a drawing process to produce a PC fiber having a 100 *µ*m outer diameter, which was taken as Example **2.**

### Example 3

A PC fiber having a 100 *µ*m outer diameter was fabricated with the same method as that of Example **2** except that the capillaries and the core rod were subjected to an etching process by immersion in hydrofluoric acid before they were packed into the support pipe, and this PC fiber was taken as Example **3.**

### Example 4

As in the above embodiment, chlorine gas was circulated while a quartz pipe is heated and stretched to produce a long capillary in which both ends have been sealed and chlorine gas has been filled into its interior, and using a micro burner it was separated into capillaries of 500 *µ*m outer diameter and 300 mm length and with both ends sealed. Next, these capillaries and a core rod of 500 *µ*m outer diameter and 300 mm length were densely packed into a support pipe with 26 mm outer diameter and 10 mm inner diameter, thus fabricating a preform. At this point, the capillary pores formed a triangular grating in a horizontal cross section, and the core rod was disposed at the central axis position. Then, auxiliary pipes were welded to both ends of the support pipe, and as in the above embodiment, dehydration by chlorine was performed. Next, one of the auxiliary pipes was removed, and the preform was set in the drawing machine so that the remaining auxiliary pipe was on top. Then, the preform was heated and stretched by a drawing furnace in a drawing process to fabricate a PC fiber having a 100 *µ*m outer diameter, which was taken as Example **4.**

### Example 5

As shown in Fig. **9C****,** a PC fiber having a 100 *µ*m outer diameter was fabricated by the same method as that of Example **1,** except that the capillaries **2, 2,** ... were used, in which only the end portion on the side opposite the side from which has drawing starts has been sealed. This PC fiber was taken as Example 5.

### Example 6

As shown in Fig. **9D****,** a PC fiber having a 100 *µ*m outer diameter was fabricated by the same method as that of Example **1,** except that capillaries **2, 2,** ... in which neither end has been sealed were used. This PC fiber was taken as Example **6.**

### Testing and Evaluation Method

1.55 *µ*m wavelength and 1.38 *µ*m wavelength light was propagated through each of the PC fibers of the Examples **1** to **5,** and the transmission loss was measured for each example. It should be noted that the capillary pores in Example **6** of the experimental examples collapsed and a photonic crystal structure due to pores was not created, and thus measurements were not performed.

### Testing and Evaluation Results

Table 1 shows the evaluated test results.

**Table 1**

| | Ex. 1 | Ex. 2 | Ex. 3 | Ex. 4 | Ex. 5 | Ex. 6 |
|---|---|---|---|---|---|---|
| 1.55 *µ*m | 70 | 10 | 7 | 3 | equivalent to Ex. 1 | - |
| 1.38 *µ*m | 700 | 400 | 190 | 50 | maximum | - |

According to the table, it can be seen that the transmission loss drops in order from Example **1** to Example **5** in both the case of 1.55 *µ*m wavelength and the case of 1.38 *µ*m wavelength.

Comparing Example **1** and Example **5,** it can be seen that even though both have an equivalent transmission loss with respect to 1.55 *µ*m wavelength light, Example **1** has a lower transmission loss with respect to 1.38 *µ*m wavelength light than Example **5.** It seems that this is because in Example **5** one end of the capillaries is open and air can enter and exit the capillaries, so that during the drawing many hydroxyl groups, which absorb 1.38 *µ*m wavelength light, are formed on the inner surface of the capillaries, whereas in Example **1** both ends of the capillaries are sealed and air cannot enter and exit the capillaries, so that the formation of hydroxyl groups on their inner surfaces is inhibited.

Comparing Example **1** and Example **2,** it can be seen that transmission loss with respect to 1.55 *µ*m wavelength light is significantly lower in Example **2** than in Example **1.** It seems that this is because in Example **1** the drawing process is performed without reducing the pressure in the voids formed in the support pipe, whereas in Example **2,** drawing is performed with the voids in a state of reduced pressure, and as a result those pressure-reduced voids are collapsed smoothly because of the heightened pressure inside the capillaries due to heating, and thus the photonic crystal structure has increased structural stability. It can also be seen that transmission loss with respect to 1.38 *µ*m wavelength light is lower in Example **2** than in Example **1.** This may be because in Example **1** the outer surface of the capillaries and the outer surface of the core rod are not dehydrated by chlorine gas, whereas in Example 2 those outer surfaces have been dehydrated by chlorine gas, and as a result hydroxyl groups and moisture have been removed from the outer surface of the capillaries and the outer surface of the core rod. Additionally, there may also be the effect of preventing the formation of hydroxyl group, because the voids formed in the support pipe are reduced in pressure and there is little moisture that comes into contact with the outer surface of the capillaries and the outer surface of the core rod.

Comparing Example **2** and Example **3,** it can be seen that transmission loss with respect to light of both 1.55 *µ*m wavelength and 1.38 *µ*m wavelength is lower in Example **3** than in Example **2.** It is conceivable that the reason transmission loss with respect to 1.38 *µ*m wavelength light is lower in Example **3** than in Example **2** is that in Example **2,** the capillaries used had both ends sealed with the hydroxyl groups remaining formed on the inner surface of the capillaries during capillary fabrication, for example, whereas in Example **3,** the capillaries that were used were immersed in hydrofluoric acid before both ends were sealed in order to etch the surface layer and remove hydroxyl groups, and as a result there were fewer hydroxyl groups remaining in the fabricated PC fiber. It seems that there is lower transmission loss with respect to 1.55 *µ*m wavelength light in Example **3** than in Example **2,** because the effect of reduced transmission loss with respect to 1.38 *µ*m wavelength light affects transmission loss with respect to 1.55 *µ*m wavelength light.

Comparing Example **3** and Example **4,** it can be seen that transmission loss with respect to light of both 1.55 *µ*m wavelength and 1.38 *µ*m wavelength is lower in Example **3** than in Example **2.** It is conceivable that the reason transmission loss with respect to 1.38 *µ*m wavelength light is lower in Example 4 than in Example 3 is that in Example **3,** although the inner surface of the capillaries has been etched with hydrofluoric acid to remove hydroxyl groups, air is ultimately filled into the capillaries, so that hydroxyl groups are formed on the inner surface of the capillaries during drawing, whereas in Example **4,** chlorine gas is circulated during capillary fabrication and the capillaries are sealed as they are, so that air does not come into contact with the inner surface of the capillaries and as a result there are fewer hydroxyl groups remaining in the PC fiber fabricated in Example **4.** It seems that there is lower transmission loss with respect to 1.55 *µ*L m wavelength light in Example **4** than in Example 3 because the effect of reduced transmission loss with respect to 1.38 *µ*m wavelength light has an effect on transmission loss with respect to 1.55 *µ*m wavelength light.

### Other Embodiments

In the first through third embodiments, a PC fiber having a solid core portion was manufactured using a core rod, however, there is no particular limitation to this, and it is also possible to manufacture a PC fiber having an empty core portion by forming a space in the central axis portion during fabrication of the preform.

Also, in the first through third embodiments, the capillaries were densely packed into the support pipe so that in a horizontal cross section the capillary pores formed a triangular grating, however, there is no particular limitation to this, and they may also form a quadrangular grating or a honeycomb grating. In such a case, filler such as rod material can be filled between the capillaries.

In the first and second embodiments, a support pipe provided with a hole that in a cross section was regular hexagonal in shape was used, however, there is no particular limitation to this, and for instance it can also be substantially regular hexagonal with rounded comer portions, such as if the adjacent edges are joined by an arc. However, in this case it is preferable that the radius of the arc is not more than half the maximum diameter of the capillaries. This is because if it is larger than half the maximum diameter of the capillaries, then the capillaries positioned at the comer portions do not sit well and the dense packing of the capillaries is lost from that portion. The hole is not limited to a regular hexagonal shape, and also can be a regular triangle, a regular quadrangle or a circle.

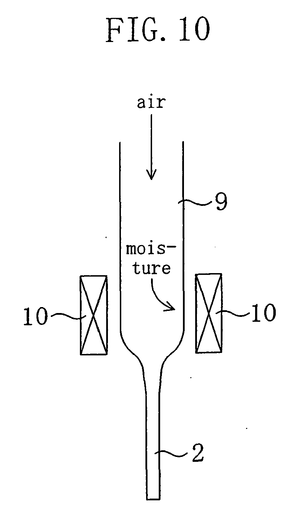

Also, in the third embodiment, chlorine gas was circulated through the quartz pipe **9** while it was heated and stretched to fabricate the capillaries **2,** however, there is no particular limitation to this, and as shown in Fig. **10****,** the quartz pipe **9** can also be heated and stretched under atmospheric pressure to fabricate the capillaries **2.** In this case, it is preferable that dehydration induced by chlorine gas or the like and/or the later mentioned etching by hydrofluoric acid or the like is performed on the inner surface of the capillaries **2.**

Also, in the third embodiment, chlorine gas was filled into the capillaries **2,** however, there is no particular limitation to this, and as long as the gas is inert in the formation of hydroxyl groups, for example, nitrogen gas or a rare gas such as argon can also be filled into the capillaries **2.**

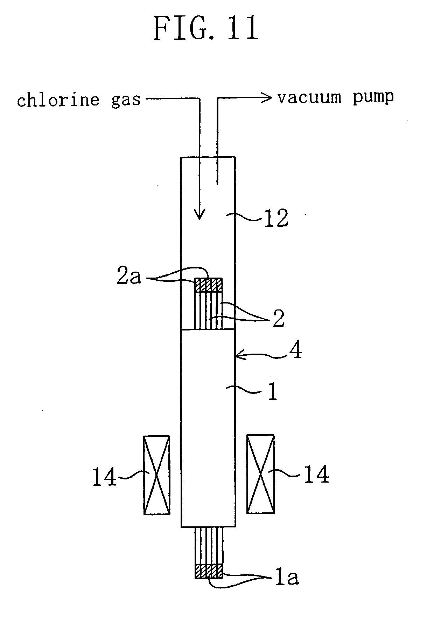

Moreover, in the third embodiment, both ends of the support pipe **1** were sealed with the voids **11** formed in the support pipe **1** of the preform **4** in a state of reduced pressure and the preform **4** was drawn, however, there is no particular limitation to this, and as shown in Fig. **11****,** it is also possible to use a vacuum pump or the like to discharge air from the auxiliary pipe **12** welded to the top of the preform **4** to put the voids **11** into a state of reduced pressure and then perform the drawing. At this time, it is also possible to dehydrate the outer surface of the capillaries **2** and the outer surface of the core rod **3** by simultaneously introducing chlorine gas through the auxiliary pipe **12.**

In the third embodiment, it is also possible to fabricate capillaries with both ends sealed or capillaries that are not sealed and then etch those capillaries by immersing them in hydrofluoric acid. By doing this the outer surface of the capillaries is etched, so that hydroxyl groups on the outer surface of the capillaries are removed and the PC fiber that is obtained has few hydroxyl groups. For the capillaries that have not been sealed, the inner surface of the capillaries is similarly etched, and it is preferable that both ends are sealed immediately after etching. This etching process can of course also be performed on the core rod. This process can be carried out in combination with dehydration by chlorine gas, or can be performed instead of dehydration by chlorine gas.

### INDUSTRIAL APPLICABILITY

As explained above, the present invention is suited for the manufacture of a PC fiber having a core portion provided with a fiber core extending in the lengthwise direction and formed as a solid or a void, and a porous clad portion provided around the core portion and having numerous pores extending along the core portion.

## Claims

1. A method for manufacturing a photonic crystal fiber having a core portion (5) that is provided with a fiber core extending in a lengthwise direction and formed as a solid or a void, and a porous clad portion (6) provided around the core portion (5) and having numerous pores extending along the core portion (5), comprising:
a step of fabricating a preform (4) by packing numerous capillaries (2) into a cylindrical support pipe (1) parallel to a central axis of the support pipe (1) and positioning a core rod (3) to serve as the solid core portion in the central axis portion of the support pipe (1), or forming a space to serve as the void core portion in the central axis portion of the support pipe (1) and
a step of drawing the preform (4) to make it small in diameter,
**characterized in that**
both ends of the numerous capillaries (2) are sealed in advance of said step of drawing,
a border of an inner wall of a horizontal cross section of the support pipe (1) has a substantially regular hexagon shape,
the capillaries (2) are densely packed in the support pipe (1) such that the capillary pores form a triangular grating in a horizontal cross section of the support pipe (1)
and that all capillaries (2) next to an inner wall of the support pipe (1) come into contact with the inner wall when the preform (4) is drawn to make the preform (4) small in diameter.

2. The method for manufacturing a photonic crystal fiber according to claim 1, **characterized in that** the substantially regular hexagon shaped inner wall border of the support pipe (1) is formed by joining adjacent edges in arcs of a radius not more than half a maximum diameter of the capillaries (2) packed into the support pipe (1).

3. The method for manufacturing a photonic crystal fiber according to claim 1 or 2, **characterized in that** filler is filled into spaces formed between the inner wall of the support pipe (1) and capillaries (2) next to the inner wall of the support pipe (1) in the step of fabricating a preform.

4. The method for manufacturing a photonic crystal fiber according to anyone of claims 1 to 3, **characterized in that** both ends of the capillaries (2) are sealed after pressure inside the capillaries (2) is set such that when the capillaries (2) are drawn they maintain a similar shape while their diameter is made smaller.

5. The method for manufacturing a photonic crystal fiber according to anyone of claims 1 to 4, wherein an inner surface and/or an outer surface of the capillaries (2) is etched.

6. The method for manufacturing a photonic crystal fiber according to anyone of claims 1 to 5, wherein an inner surface and/or an outer surface of the capillaries (2) is dehydrated.

7. The method for manufacturing a photonic crystal fiber according to anyone of claims 1 to 6, wherein the drawing is performed with the voids formed in the preform (4) in a state of reduced pressure.

## Patentansprüche

1. Verfahren zum Herstellen einer photonischen Kristallfaser mit einem Kernabschnitt (5), der mit einem Faserkern versehen ist, der sich in einer Längsrichtung erstreckt und als massiver Körper oder als Hohlraum ausgebildet ist, und einem porösen Verkleidungsabschnitt (6), der um den Kernabschnitt (5) vorgesehen ist und zahlreiche, sich entlang des Kernabschnitts (5) erstreckende Poren aufweist, umfassend:
einen Schritt des Fertigens einer Vorform (4) durch Packen zahlreicher Kapillaren (2) in ein zylindrisches Stützrohr (1) parallel zu einer Mittelachse des Stützrohrs (1) und Positionieren eines Kernstabs (3), der als massiver Kernabschnitt dienen soll, in dem Mittelachsenabschnitt des Stützrohrs (1) oder Ausbilden eines Raums, der als hohler Kernabschnitt dienen soll, in dem Mittelachsenabschnitt des Stützrohrs (1) und
einen Schritt des Ziehens der Vorform (4), um ihren Durchmesser klein auszulegen,
**dadurch gekennzeichnet, dass**
beide Enden der zahlreichen Kapillaren (2) vor dem Schritt des Ziehens abgedichtet werden,
ein Rand einer Innenwand eines horizontalen Querschnitts des Stützrohrs (1) eine im Wesentlichen regelmäßige Sechseckform aufweist,
die Kapillaren (2) in dem Stützrohr (1) dicht gepackt sind, so dass die Kapillarenporen in einem horizontalen Querschnitt des Stützrohrs (1) ein dreieckiges Gitter bilden
und dass alle Kapillaren (2) neben einer Innenwand des Stützrohrs (1) mit der Innenwand in Kontakt kommen, wenn die Vorform (4) gezogen wird, um die Vorform (4) mit einem kleinen Durchmesser auszulegen.

2. Verfahren zum Herstellen einer photonischen Kristallfaser nach Anspruch 1, **dadurch gekennzeichnet, dass** der Innenwandrand des Stützrohrs (1), der im Wesentlichen von regelmäßiger Sechseckform ist, durch Verbinden von benachbarten Kanten in Bögen eines Radius von nicht mehr als der Hälfte eines maximalen Durchmessers der in das Stützrohr (1) gepackten Kapillaren (2) gebildet wird.

3. Verfahren zum Herstellen einer photonischen Kristallfaser nach Anspruch 1 oder 2, **dadurch gekennzeichnet, dass** in dem Schritt des Fertigens einer Vorform in Räume, die zwischen der Innenwand des Stützrohrs (1) und Kapillaren (2) neben der Innenwand des Stützrohrs (1) ausgebildet sind, Füllstoff eingefüllt wird.

4. Verfahren zum Herstellen einer photonischen Kristallfaser nach einem der Ansprüche 1 bis 3, **dadurch gekennzeichnet, dass** beide Enden der Kapillaren (2) abgedichtet werden, nachdem Druck in den Kapillaren (2) so eingestellt ist, dass bei Ziehen der Kapillaren (2) diese eine ähnliche Form beibehalten, während ihr Durchmesser verkleinert wird.

5. Verfahren zum Herstellen einer photonischen Kristallfaser nach einem der Ansprüche 1 bis 4, wobei eine Innenfläche und/oder eine Außenfläche der Kapillaren (2) geätzt wird.

6. Verfahren zum Herstellen einer photonischen Kristallfaser nach einem der Ansprüche 1 bis 5, wobei eine Innenfläche und/oder eine Außenfläche der Kapillaren (2) entwässert wird.

7. Verfahren zum Herstellen einer photonischen Kristallfaser nach einem der Ansprüche 1 bis 6, wobei das Ziehen durchgeführt wird, während sich die in der Vorform (4) ausgebildeten Hohlräume in einem Zustand reduzierten Drucks befinden.

## Revendications

1. Procédé de fabrication d'une fibre en cristal photonique comportant une partie coeur (5) qui est pourvue d'un coeur de fibre s'étendant dans une direction longitudinale et réalisé sous forme de solide ou de vide, et d'une partie gaine poreuse (5) prévue autour de la partie coeur (5) et comportant de nombreux pores s'étendant le long de la partie coeur (5), comprenant :
une étape de fabrication d'une préforme (4) en empaquetant de nombreux capillaires (2) dans un tube de support (1) cylindrique parallèlement à un axe central du tube de support (1) et en positionnant une barre de coeur (3) afin de servir de partie coeur solide dans la partie d'axe central du tube de support (1), ou en formant un espace afin de servir de partie coeur vide dans la partie d'axe central du tube de support (1) et
une étape d'étirage de la préforme (4) afin d'en réduire le diamètre,
**caractérisé en ce que**
les deux extrémités des nombreux capillaires (2) sont scellées avant ladite étape d'étirage,
une bordure d'une paroi intérieure d'une section transversale horizontale du tube de support (1) présente une forme hexagonale sensiblement régulière,
les capillaires (2) sont empaquetés de manière dense dans le tube de support (1) de telle sorte que les pores de capillaires forment un réseau triangulaire dans une section transversale horizontale du tube de support (1) et que tous les capillaires (2) près d'une paroi intérieure du tube de support (1) viennent en contact avec la paroi intérieure quand la préforme (4) est étirée pour réduire le diamètre de la préforme (4).

2. Procédé de fabrication d'une fibre en cristal photonique selon la revendication 1, **caractérisé en ce que** la bordure de paroi intérieure de forme hexagonale sensiblement régulière du tube de support (1) est formée en joignant des bords adjacents en arcs d'un rayon ne dépassant pas la moitié d'un diamètre maximal des capillaires (2) empaquetés dans le tube de support (1).

3. Procédé de fabrication d'une fibre en cristal photonique selon la revendication 1 ou 2, **caractérisé en ce que** de la matière de remplissage est remplie dans des espaces formés entre la paroi intérieure du tube de support (1) et des capillaires (2) près de la paroi intérieure du tube de support (1) dans l'étape de fabrication d'une préforme.

4. Procédé de fabrication d'une fibre en cristal photonique selon l'une quelconque des revendications 1 à 3, **caractérisé en ce que** les deux extrémités des capillaires (2) sont scellées après qu'une pression à l'intérieur des capillaires (2) est réglée de telle sorte que, quand les capillaires (2) sont étirés, ils conservent une forme similaire tandis que le diamètre est réduit.

5. Procédé de fabrication d'une fibre en cristal photonique selon l'une quelconque des revendications 1 à 4, dans lequel
une surface intérieure et/ou une surface extérieure des capillaires (2) est attaquée chimiquement.

6. Procédé de fabrication d'une fibre en cristal photonique selon l'une quelconque des revendications 1 à 5, dans lequel
une surface intérieure et/ou une surface extérieure des capillaires (2) est déshydratée.

7. Procédé de fabrication d'une fibre en cristal photonique selon l'une quelconque des revendications 1 à 6, dans lequel
l'étirage est effectué avec les espaces vides formés dans la préforme (4) dans un état de pression réduite.
